# FASCICULE DE BREVET EUROPEEN

(11) **EP 4 209 292 B1**
(45) Date de publication et mention de la délivrance du brevet: **15.07.2026**
(21) Numéro de dépôt: 23153018.9
(22) Date de dépôt: 22.02.2021
(51) Int. Cl.: B22F 3/10, B22F 3/22, B22F 3/24, B22F 5/00, B23C 5/28, B23P 15/28, B24B 55/02, B24D 18/00

(54) **OUTIL DE COUPE AVEC DES ORIFICES DE LUBRIFICATION DE FORMES COMPLEXES**
SCHNEIDWERKZEUG MIT SCHMIERÖFFNUNGEN KOMPLEXER FORMEN
CUTTING TOOL WITH COMPLEX SHAPED LUBRICATING PORTS

(43) Date de publication de la demande: 12.07.2023
(62) Demande divisionnaire de: 21158333.1
(73) Titulaire: Comadur S.A., 2400 Le Locle (CH)
(72) Inventeur: BUBENDORF, Denis, 2022 Bevaix (CH); VUILLE, Pierry, 2338 Les Emibois (CH); THIONNET, Eric, 25210 Le Russey (FR); AREDE, Paulo, 2300 La Chaux-de-Fonds (CH)
(74) Mandataire: ICB SA

(56) Documents cités:
- CH-A2- 716 141
- US-A1- 2018 304 381

## Description

### Domaine technique de l'invention

L'invention relève du domaine de l'usinage mécanique, et notamment du domaine des outils et accessoires d'usinage. L'invention concerne plus particulièrement un outil de coupe avec des orifices de lubrification de formes complexes.

L'outil de coupe selon l'invention est notamment destiné à l'usinage d'une pièce, en particulier, d'un composant horloger.

L'invention concerne un outil de coupe selon le préambule de la revendication 1, tel que décrit dans le document US 2018/304381 A1.

### Arrière-plan technologique

Dans le domaine de l'usinage mécanique, la lubrification a pour objectif, d'une part, la lubrification de l'interface entre l'outil de coupe et la pièce usinée pour réduire le frottement, d'autre part, la réfrigération dudit interface. Un autre objectif de la lubrification est d'évacuer les copaux au fur et à mesure de l'opération de coupe, c'est-à-dire lors de l'usinage. Globalement, la lubrification permet un usinage performant.

Certains outils de coupe comportent des orifices internes de lubrification afin d'augmenter les effets de la lubrification lors de l'usinage.

On connait de l'état de la technique des outils de coupe comportant un corps dans lequel sont usinés des orifices de lubrification, tels qu'un alésage axial traversant et des canaux s'étendant radialement entre l'alésage et la surface active de l'outil de coupe.

Le corps est généralement réalisé en aciers haute résistance et un dépôt galvanique de grains abrasifs est réalisé sur la surface active.

Ces outils présentent notamment l'inconvénient d'être complexes et très couteux à produire. En effet, le matériau qui les constitue étant dur, leur usinage est complexe.

En outre, la dureté des aciers haute résistance limite l'usinage de ces outils de coupe, et notamment de leurs orifices de lubrification, à la réalisation de formes relativement simples.

Pour ces raisons, l'usage de ces outils de coupe présentant des orifices de lubrification est assez limité. Par exemple, ils se limitent à une utilisation dans des applications de meulage, pour des pièces réalisées dans des matériaux présentant une dureté inférieure à un certain seuil seulement.

### Résumé de l'invention

L'invention résout les inconvénients précités en proposant une solution permettant la réalisation d'un outil de coupe dont le corps présente des orifices de lubrification de formes complexes.

A cet effet, la présente invention concerne un outil de coupe comprenant un corps comportant des orifices de lubrification et présentant une partie de préhension destinée à être fixée à un mandrin porte-outil et une partie active comportant une surface active. Le long de la surface active s'étendent des gorges hélicoïdales, lesdites gorges étant reliées à un évidement central s'étendant axialement dans le corps de l'outil par des canaux radiaux. Ledit évidement central s'étend entre une ouverture d'admission de lubrifiant opposée à une ouverture d'évacuation de lubrifiant.

Dans des modes particuliers de réalisation, les gorges périphériques s'étendent hélicoïdalement entre une première extrémité débouchant sur une extrémité libre de l'outil de coupe et une seconde extrémité débouchant à proximité de la partie de préhension de l'outil de coupe, c'est-à-dire plus proche de la partie de préhension que de l'extrémité libre de l'outil de coupe.

L'ouverture d'évacuation est configurée de sorte à générer un effet venturi.

Dans des modes particuliers de réalisation, la surface active présente sensiblement une forme de cylindrique de révolution comportant une surface périphérique et une surface d'extrémité, ladite surface d'extrémité définissant l'extrémité libre du corps de l'outil de coupe. L'ouverture d'évacuation débouche sur une fraisure, ledit outil de coupe comprenant des gorges d'extrémité s'étendant radialement sur la surface d'extrémité, depuis la fraisure jusqu'à la surface périphérique.

Dans des modes particuliers de réalisation, chaque canal radial s'étend en longueur selon une direction formant un angle aigu avec un axe longitudinal du corps de l'outil de coupe, l'angle étant orienté vers l'extrémité libre dudit corps de l'outil de coupe.

Préférentiellement, le canal radial s'étend selon une direction formant un angle de 45 degrés, plus ou moins 10 degrés, avec l'axe longitudinal du corps de l'outil de coupe.

Cette caractéristique est avantageuse en ce qu'elle permet une meilleure distribution du lubrifiant autour du corps de l'outil de coupe.

Dans des modes particuliers de réalisation, chaque canal radial s'étend en longueur présente une forme hélicoïdale.

Cette caractéristique permet d'améliorer encore davantage la distribution du lubrifiant autour du corps de l'outil de coupe.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente un logigramme d'un exemple de mise en œuvre d'un procédé de fabrication d'un outil de coupe avec orifices de lubrification de formes complexes ;
- la figure 2 représente une vue en perspective d'un exemple de réalisation d'un insert pour la mise en œuvre du procédé de la figure 1 ;
- la figure 3 représente une vue en perspective d'un exemple de réalisation d'un outil de coupe selon l'invention, obtenu par la mise en œuvre du procédé de la figure 1 ;
- la figure 4 représente une vue en coupe transversale de l'outil de coupe de la figure 3 auquel est surmoulé l'insert de la figure 2.

### Description détaillée de l'invention

La présente invention concerne un outil de coupe 10 avec des orifices de lubrification de formes complexes fabriqué par procédé de fabrication tel que décrit ci-après.

Dans la présente description, il est décrit une application préférée de l'invention dans laquelle l'outil de coupe 10 est un outil d'usinage, par exemple de meulage, de perçage ou de fraisage, destiné à être entrainé en rotation pour usiner une pièce.

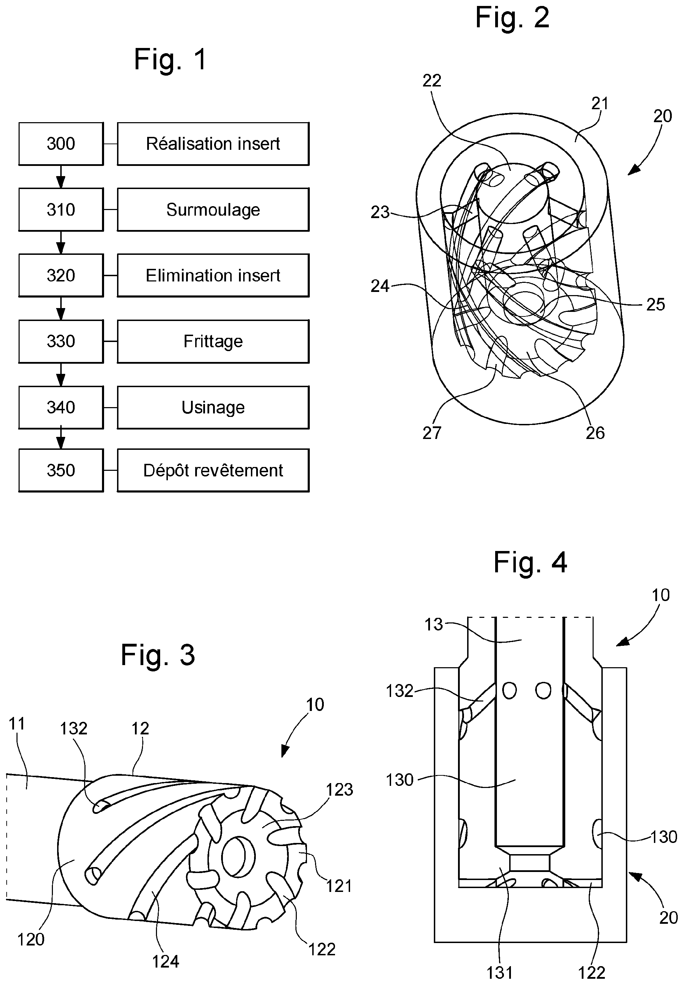

Comme le montre le logigramme de la figure 1, le procédé comporte une étape préliminaire de réalisation 320 d'un insert 20 en matériau polymère.

L'insert 20 est illustré dans un exemple préféré de réalisation sur la figure 2, et est réalisé, par exemple par moulage ou par fabrication additive, de sorte à présenter une forme en négatif de celle de tout ou partie d'un corps de l'outil de coupe 10.

Autrement dit, l'insert 20 présente une forme telle qu'elle est complémentaire de celle du corps de l'outil de coupe 10 qui est destiné à être fabriqué par le procédé.

Encore autrement dit, la forme de l'insert 20 est définie selon la forme souhaitée de l'outil de coupe 10, étant donné que ladite forme souhaitée de l'outil de coupe 10 est obtenue par soustraction de la forme de l'insert 20, comme décrit plus en détail ci-après.

L'insert 20 est réalisé en matériau polymère, par exemple en Polybutyral de vinyle plastifié (connu sous l'acronyme « PVB »), en Cellulose Acétate Butyrate plastifié (connu sous l'acronyme « CAB »), ou en résine acrylique de type Poly butyle méthacrylate (connu sous l'acronyme « PBMA »).

Une fois l'insert 20 réalisé, le corps de l'outil de coupe 10 est surmoulé avec ledit insert 20 lors d'une étape de surmoulage 310 représentée sur la vue en coupe de la figure 4. Plus particulièrement, lors de cette étape de surmoulage 310, un mélange de poudre, par exemple de Tungstène ou autres métaux, et de liant, par exemple polymère ou métallique, préalablement réalisé est injecté dans un moule dans lequel est disposé l'insert 20.

La poudre et le liant sont avantageusement choisis de sorte à former un corps de l'outil en matériau métallique dur, une fois l'étape de surmoulage 310 terminée.

Ensuite, une étape d'élimination 320 de l'insert 20 est réalisée, de sorte à former au sein du corps de l'outil de coupe 10 des orifices de lubrifications dont la forme est complémentaire de celle d'une partie de l'insert 20.

Lors de cette étape d'élimination 320 de l'insert 20, l'ensemble résultant de l'étape de surmoulage 310, c'est-à-dire l'insert 20 et l'outil de coupe 10 coopérant l'un avec l'autre, est introduit dans un bain, préférentiellement d'alcool chauffé à 80°C.

Le bain d'alcool a pour effet de dissoudre l'insert 20 de sorte à obtenir uniquement l'outil de coupe 10.

Il y a lieu de noter que toute méthode pouvant éliminer le matériau constituant l'insert 20 sans dégrader celui constituant le corps de l'outil de coupe 10 peut être mise en œuvre dans l'étape d'élimination 320 de l'insert 20.

Le procédé de fabrication comporte ensuite une étape de frittage 330 du corps de l'outil de coupe 10, consistant à chauffer ledit corps de l'outil de coupe 10 de sorte à former la cohésion du matériau qui le constitue et à le durcir.

Le corps de l'outil de coupe 10 est de forme sensiblement cylindrique et s'étend selon un axe longitudinal. Il comporte une première partie 11 destinée à être fixée à un mandrin porte-outil, reliée à une seconde partie 12 destinée à être au contact de la pièce à usiner. La première partie 11 est ici appelée « partie de préhension » 11 et la seconde partie 12 est appelée « partie active » 12, ladite partie active 12 comportant une surface externe appelée « surface active ».

Comme le montre la figure 3, au moins la partie active 12 du corps de l'outil de coupe 10 comporte avantageusement des orifices de lubrification à l'issue de l'étape d'élimination 320 de l'insert 20, lesdits orifices étant de formes complémentaires de celles de portions de l'insert 20 décrites en détail ci-après, dans la mesure où ils sont générés par la soustraction desdites portions au sein du corps de l'outil de coupe 10.

Ainsi, les orifices de lubrification peuvent présenter des formes complexes, selon les formes prises par lesdites portions de l'insert 20.

Il y a lieu de noter que la forme de l'insert 20, et en particulier desdites portions de l'insert 20, peut être très complexe lorsque ce dernier est réalisé par fabrication additive.

La partie active 12 du corps de l'outil de coupe 10 est ensuite usinée lors d'une étape d'usinage 340 du corps de l'outil de coupe 10.

Lors de cette étape, la partie active 12 est rectifiée de sorte à obtenir un état de surface convenable pour la réalisation d'une étape de dépôt d'un revêtement abrasif 350, dans laquelle la surface active du corps de l'outil de coupe 10 est recouverte d'une couche d'abrasif par exemple par dépôt galvanique.

La partie de préhension 11 peut être usinée lors de l'étape d'usinage de sorte à être adaptée à coopérer en fixation avec un mandrin porte-outil.

Alternativement, le moule peut être d'une forme telle que la partie de préhension 11 est moulée lors de l'étape de surmoulage 310.

Préférentiellement, la surface active présente sensiblement une forme de cylindrique de révolution comportant une surface périphérique 120 et une surface d'extrémité 121, ladite surface d'extrémité 121 définissant l'extrémité libre du corps de l'outil de coupe 10, comme le montre la vue en perspective de la figure 3.

Aussi, dans l'exemple préféré de réalisation représenté sur les figures, l'insert 20 est conformé de sorte que l'outil de coupe 10 présente au moins dans sa partie active, un évidement central 13 de section circulaire s'étendant axialement à l'intérieur du corps de l'outil, entre une première ouverture (non représentée sur les figures) destinée à recevoir du lubrifiant, dite « ouverture d'admission », située vers ou dans la partie de préhension 11 de l'outil, et une seconde ouverture, dite « ouverture d'évacuation » 130, destinée à évacuer le lubrifiant, débouchant sur l'extrémité libre.

L'ouverture d'évacuation 130 est avantageusement configurée de sorte à générer un effet venturi. A cet effet, l'évidement central 13 présente, au niveau de l'ouverture d'évacuation 130, une lèvre 131 radiale agencée de sorte à réduire progressivement la section dudit évidement central 13, comme le montre la vue en coupe de la figure 4.

Avantageusement, l'ouverture d'évacuation 130 débouche sur l'extrémité libre par une fraisure 123, de sorte que la section de l'évidement central 13 augmente progressivement depuis la lèvre 131 jusqu'à ladite extrémité libre. Les effets techniques de ces caractéristiques sont décrits ci-après.

Avantageusement, la partie active comporte des gorges d'extrémité 122 s'étendant radialement sur la surface d'extrémité 121, depuis la fraisure 123 jusqu'à la surface périphérique 120. Ces gorges d'extrémité 122 sont réparties angulairement autour de l'axe longitudinal du corps de l'outil de coupe 10 de façon régulière, comme représenté sur la figure 3.

Les gorges d'extrémité 122 permettent de distribuer radialement de façon homogène le flux de lubrifiant expulsé par l'ouverture d'évacuation 130 lors du fonctionnement de l'outil de coupe 10.

Encore avantageusement, comme le montre également la figure 3, la partie active comporte des gorges périphériques 124 s'étendant hélicoïdalement sur la surface périphérique 120, entre une première extrémité débouchant sur l'extrémité libre de l'outil de coupe 10, c'est-à-dire sur la surface d'extrémité 121, et une seconde extrémité débouchant à proximité de la partie de préhension 11 de l'outil de coupe 10. Autrement dit, la seconde extrémité des gorges périphériques 124 est plus proche de la partie de préhension 11 que de l'extrémité libre de l'outil de coupe 10.

Ces gorges périphériques 124 sont réparties angulairement de façon régulière autour de l'axe longitudinal du corps de l'outil de coupe 10.

Comme illustré sur les figures 3 et 4, l'outil de coupe 10 comprend des canaux radiaux 132 reliant l'évidement central 13 aux gorges périphériques 124. Plus précisément, l'outil de coupe 10 comporte autant de canaux radiaux 132 que de gorges périphériques 124, chaque canal radial 132 débouchant à la seconde extrémité d'une gorge périphérique 124.

Le terme canal défini dans le présent texte un conduit fermé radialement et débouchant axialement.

Ainsi, lors de la rotation de l'outil de coupe 10, lors du fonctionnement de l'outil de coupe 10, une partie du lubrifiant circulant dans l'évidement central 13 est expulsé par les canaux radiaux 132, générant un flux de lubrifiant au sein de chacune des gorges périphériques 124.

Ces caractéristiques participent à optimiser la lubrification et la réfrigération de l'outil de coupe 10 et de la pièce usinée, et permettent donc l'usinage de pièces réalisées en matériaux très durs, du type céramique, tel que du nitrure de silicium, de l'oxyde de zirconium, etc., ou bien du saphir ou autres pierres, de l'alumine, ou tout métal dur.

Le fait que la seconde extrémité des gorges périphériques 124 soit plus proche de la partie de préhension 11 que de l'extrémité libre de l'outil de coupe 10 permet de faire en sorte que la majorité ou l'ensemble de la surface active soit lubrifiée pendant le fonctionnement de l'outil de coupe 10.

Préférentiellement, chaque canal radial 132 s'étend en longueur selon une direction formant un angle aigu, par exemple de 45 degrés, avec l'axe longitudinal du corps de l'outil de coupe 10, ledit angle aigu étant orienté vers l'extrémité libre dudit corps de l'outil de coupe 10.

Dans un autre exemple, l'angle peut être d'une valeur comprise entre 35 et 55 degrés.

Cette caractéristique est avantageuse en ce qu'elle permet une meilleure distribution du lubrifiant autour du corps de l'outil de coupe 10.

Encore préférentiellement, la direction selon laquelle chaque canal radial 132 s'étend en longueur présente une forme hélicoïdale. Autrement dit, chaque canal présente une forme courbe.

Cette caractéristique permet d'améliorer encore davantage la distribution du lubrifiant autour du corps de l'outil de coupe 10, et ainsi de limiter encore l'augmentation de température à l'interface entre l'outil de coupe 10 et la pièce usinée, lors de l'usinage, ce qui conduit à éviter une usure anticipée du dépôt galvanique.

La lèvre 131 a pour effet d'augmenter la pression d'expulsion du lubrifiant au niveau de l'ouverture d'évacuation 130 et ainsi de réduire ou d'éliminer la perte de pression de lubrifiant au sein de l'évidement central 13 générée par les canaux radiaux 132. La fraisure 123 a quant à elle pour effet d'assurer une répartition radiale homogène du flux de lubrifiant expulsé.

Dans le présent exemple de réalisation de l'invention et comme l'illustre en particulier la figure 2, l'insert 20 présente un corps de l'insert 20 sous la forme d'un tube creux 21 borgne de section circulaire destiné à contenir et à former le corps de l'outil de coupe 10.

Le tube creux 21 est relié à une tige centrale 22 destinée à former l'évidement central 13, par des tiges radiales 23 destinées à former les canaux radiaux 132.

L'insert 20 comporte également une saillie 24 s'étendant hélicoïdalement sur une face périphérique interne du tube creux 21, depuis chaque tige radiale 23 jusqu'à une face interne d'une paroi de fond dudit tube creux 21. Les saillies 24 sont destinées à former les gorges périphériques 124.

La tige centrale 22 comporte, à l'extrémité par laquelle elle est liée à la paroi de fond, une diminution de section définissant une gorge radiale 25 destinée à former la lèvre 131.

La gorge radiale 25 est reliée à la face interne de la paroi de fond par un congé 26 destiné à former la fraisure 123.

Enfin, des saillies 27 s'étendent radialement sur la face interne de la paroi de fond, depuis le congé 26 jusqu'à la face périphérique 120 interne du tube creux 21. Ces saillies 27 sont destinées à former les gorges d'extrémité 122 lors de la réalisation du procédé de fabrication.

Il y a lieu de noter que la présente invention peut être appliquée à un outil de coupe destiné à réaliser des opérations de perçage, de fraisage ou toute autre opération d'usinage mécanique.

## Revendications

1. Outil de coupe (10) comprenant un corps comportant des orifices de lubrification et présentant une partie de préhension (11) destinée à être fixée à un mandrin porte-outil et une partie active présentant sensiblement une forme de cylindrique de révolution comportant une surface périphérique (120) et une surface d'extrémité (121) définissant une extrémité libre du corps de l'outil de coupe (10), ladite partie active comportant une surface active le long de laquelle s'étendent des gorges hélicoïdales, lesdites gorges étant reliées à un évidement central (13) s'étendant axialement dans le corps de l'outil par des canaux radiaux (132), ledit évidement central (13) s'étendant entre une ouverture d'admission de lubrifiant opposée à une ouverture d'évacuation (130) de lubrifiant, ledit outil de coupe (10) étant **caractérisé en ce que** l'ouverture d'évacuation (130) présente une lèvre (131) radiale agencée de sorte à réduire progressivement la section dudit évidement central (13), l'ouverture d'évacuation (130) débouchant sur l'extrémité libre par une fraisure (123), de sorte que la section de l'évidement central (13) augmente progressivement depuis la lèvre (131) jusqu'à l'extrémité libre, ledit outil de coupe (10) comprenant en outre des gorges d'extrémité (122) s'étendant radialement sur la surface d'extrémité (121), depuis la fraisure (123) jusqu'à la surface périphérique (120).

2. Outil de coupe (10) selon la revendication 1, dans lequel les gorges périphériques (124) s'étendent hélicoïdalement entre une première extrémité débouchant sur l'extrémité libre de l'outil de coupe (10) et une seconde extrémité débouchant à proximité de la partie de préhension (11) de l'outil de coupe (10), c'est-à-dire plus proche de la partie de préhension (11) que de l'extrémité libre de l'outil de coupe (10).

3. Outil de coupe (10) selon l'une des revendications 1 ou 2, dans lequel chaque canal radial (132) s'étend en longueur selon une direction formant un angle aigu avec un axe longitudinal du corps de l'outil de coupe (10), ledit angle aigu étant orienté vers l'extrémité libre dudit corps de l'outil de coupe (10).

4. Outil de coupe (10) selon la revendication 3, dans lequel la direction selon laquelle chaque canal radial (132) s'étend en longueur présente une forme hélicoïdale.

## Patentansprüche

1. Schneidwerkzeug (10) mit einem Körper, der Schmieröffnungen aufweist und einen Griffabschnitt (11) zur Befestigung an einem Werkzeugfutter sowie einen im Wesentlichen rotationssymmetrischen Arbeitsabschnitt mit einer Randfläche (120) und einer Endfläche (121), die ein freies Ende des Körpers des Schneidwerkzeugs (10) definiert, wobei der aktive Teil eine aktive Oberfläche aufweist, entlang der sich spiralförmige Nuten erstrecken, wobei die Nuten über radiale Kanäle (132) mit einer zentralen Ausnehmung (13) verbunden sind, die sich axial im Werkzeugkörper erstreckt, wobei sich die zentrale Ausnehmung (13) zwischen einer der Schmiermittelauslassöffnung (130) gegenüberliegenden Schmiermitteleinlassöffnung und einer Schmiermittelauslassöffnung (130) erstreckt, wobei das Schneidwerkzeug (10) **dadurch gekennzeichnet ist, dass** die Abflussöffnung (130) eine radiale Lippe (131) aufweist, die so angeordnet ist, dass sie den Querschnitt der zentralen Ausnehmung (13) allmählich verringert, wobei die Abflussöffnung (130) über eine Senkung (123) zum freien Ende hin mündet, sodass sich der Querschnitt der zentralen Ausnehmung (13) von der Lippe (131) bis zum freien Ende allmählich vergrößert, wobei das Schneidwerkzeug (10) außerdem Endnuten (122) umfasst, die sich radial über die Endfläche (121) von der Senkung (123) bis zur Randfläche (120) erstrecken.

2. Schneidwerkzeug (10) nach Patentanspruch 1, wobei sich die Randnuten (124) schraubenförmig zwischen einem ersten Ende, das am freien Ende des Schneidwerkzeugs (10) mündet, und einem zweiten Ende erstrecken, das in der Nähe des Griffabschnitts (11) des Schneidwerkzeugs (10) mündet, d. h. näher am Griffbereich (11) als am freien Ende des Schneidwerkzeugs (10).

3. Schneidwerkzeug (10) nach einem der Patentansprüche 1 oder 2, wobei sich jeder Radialkanal (132) in Längsrichtung in einer Richtung erstreckt, die einen spitzen Winkel mit einer Längsachse des Schneidwerkzeugkörpers (10) bildet, wobei der spitze Winkel zum freien Ende des Schneidwerkzeugkörpers (10) hin ausgerichtet ist.

4. Schneidwerkzeug (10) nach Patentanspruch 3, wobei die Richtung, in der sich jeder Radialkanal (132) in Längsrichtung erstreckt, eine spiralförmige Form aufweist.

## Claims

1. A cutting tool (10) comprising a body comprising lubrication orifices and featuring a gripping part (11) designed to be fastened to a tool-carrying chuck and a working part substantially in the form of a right circular cylinder comprising a peripheral surface (120) and an end surface (121) defining a free end of the body of the cutting tool (10), said working part comprising a working surface along which extend helical grooves, said grooves being connected to a central recess (13) extending axially within the body of the tool by radial channels (132), said central recess (13) extending between a lubricant inlet opening opposite a lubricant drainage opening (130), said cutting tool (10) being **characterised in that** the drainage opening (130) has a radial lip (131) designed such that it gradually reduces the cross-section of said central recess (13), the drainage opening (130) opening onto the free end via a chamfer (123), such that the cross-section of the central recess (13) gradually increases from the lip (131) to the free end, said cutting tool (10) further comprising end grooves (122) extending radially on the end surface (121), from the chamfer (123) to the peripheral surface (120).

2. The cutting tool (10) according to claim 1, in which the peripheral grooves (124) extend helically between a first end opening onto the free end of the cutting tool (10) and a second end opening near the gripping part (11) of the cutting tool (10), that is, closer to the gripping part (11) than to the free end of the cutting tool (10).

3. The cutting tool (10) according to any of claims 1 or 2, in which each radial channel (132) extends longitudinally in a direction forming an acute angle with a longitudinal axis of the body of the cutting tool (10), said acute angle being oriented towards the free end of said body of the cutting tool (10).

4. The cutting tool (10) according to claim 3, in which the direction in which each radial channel (132) extends longitudinally is helical.
